(19) **Europäisches Patentamt / European Patent Office / Office européen des brevets**

(11) **EP 3 725 832 B1**

(12) **EUROPEAN PATENT SPECIFICATION**

(45) Date of publication and mention of the grant of the patent:
**15.03.2023 Bulletin 2023/11**

(21) Application number: **20163282.5**

(22) Date of filing: **16.03.2020**

(51) International Patent Classification (IPC):
*C08J 11/06* (2006.01)    *G07D 7/12* (2006.01)
*G01N 21/64* (2006.01)    *C09K 11/77* (2006.01)
*C09D 11/037* (2014.01)    *G07D 7/2033* (2016.01)
*G07D 7/1205* (2016.01)    *C09D 11/322* (2014.01)
*C09D 11/50* (2014.01)

(52) Cooperative Patent Classification (CPC):
**G01N 21/643; G07D 7/12; G07D 7/1205; G07D 7/2033;** C09D 11/322; C09D 11/50; G01N 2021/6439; G01N 2021/6497

(54) **RESIN DETERIORATION EVALUATION TEST METHOD AND USE OF THE METHOD**

TESTVERFAHREN ZUR BEWERTUNG DES HARZABBAUS UND VERWENDUNG DES VERFAHRENS

PROCÉDÉ D'ESSAI D'ÉVALUATION DE DÉTÉRIORATION DE RÉSINE ET ULTILISATION DU PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.04.2019 JP 2019077500**

(43) Date of publication of application:
**21.10.2020 Bulletin 2020/43**

(73) Proprietor: **KONICA MINOLTA, INC.**
**Tokyo**
**100-7015 (JP)**

(72) Inventors:
• SAITA, Yasuharu
 Tokyo, Chiyoda-ku 100-7015 (JP)
• TSUKAMOTO, Toshio
 Tokyo, Chiyoda-ku 100-7015 (JP)

(74) Representative: **Murgitroyd & Company**
**Murgitroyd House**
**165-169 Scotland Street**
**Glasgow G5 8PL (GB)**

(56) References cited:
WO-A1-2017/220079     JP-A- 2010 132 798
US-A- 5 201 921

## Description

### Technological Field

The present invention relates to a resin deterioration evaluation test method and a resin recycling system using the method. More particularly, the present invention relates to a resin deterioration evaluation test method and a resin recycling system for realizing easy determination of a deterioration state of a collected resin component.

### Background Art

Collected plastic components are degraded to various degrees depending on the condition of used in a product. For example, those used outdoors for a long time are severely deteriorated due to ultraviolet rays, whereas those used for a short period of time at a position distant from a window in a room are not. However, since such deterioration degrees cannot be easily judged based on appearance, a regenerated recycled resin component may have low strength due to unintentional use of a severely deteriorated plastic component. In order to examine the deterioration degree for each plastic component in advance, it takes a great deal of time and cost to measure the molecular weight and to evaluate the strength of the resin. This in turn causes a recycling system not to work effectively.

Therefore, there is a need for a means for easily judging the condition of deterioration of the collected resin.

Patent Document 1 discloses a technique using a luminescent material that is kneaded into a resin (polypropylene (PP) -based resin, polystyrene (PS) -based resin, or the like) in advance. The luminescent material reacts with a carbonyl group generated in response to decomposition of the resin and emits fluorescence. However, the resin applicable to this method is limited to those generating carbonyl groups. Furthermore, since the luminescent material is kneaded into the resin in advance, the luminence will be low due to the little light-emitting substance existing on the surface of the resin component, or the light-emitting substance needs to be added in a very large amount. As described above, the technique of Patent Document 1 has many restrictions and cannot be used widely. Furthermore, a commercially available molded material cannot be used as it is, and deterioration of the luminescent material itself is not taken into account.

Patent Document 2 discloses a resin deterioration evaluation method including determining a deterioration degree of a resin (polyamide (PA) -based resin or polyester (PE) -based resin) by measuring the luminescence intensity or the fluorescent luminescence amount of the labeling reagent that reacts with a functional group that is generated in response to deterioration of the resin. However, there are disadvantages that the labeling reagent is limited depending on the functional group, that the luminescence amount is small since the amount of the generated functional group is small, and the like.

Accordingly, there is a great demand of a resin deterioration evaluation test method that enables easy determination of deterioration conditions of the collected resin.

### Citation List

### Patent Literature

[Patent Document 1] JP 2010-132798 A
[Patent Document 2] JP 2006-275762 A

WO2017220079A1 relates to a method for identifying materials. US5201921A relates to a process for identifying plastics by addition of fluorescent dye.

### Summary of Invention

Technical Problem

The present invention has been made in view of the above problems and circumstances, and an object of the present invention is to provide a resin deterioration evaluation test method that enables easy determination of deterioration conditions of the collected resin component and a resin recycling system using the method.

Viewed from a first aspect, there is provided a resin deterioration evaluation test method using a fluorescent agent, comprising:

irradiating a resin component with ultraviolet rays and measuring a fluorescence amount emitted by a fluorescent agent in response to the irradiating (STEP S2), the fluorescent agent being on a surface of the resin component and emitting fluorescence in response to ultraviolet irradiation in itself; and

evaluating a deterioration degree of the resin component based on the fluorescence amount (STEP S3), wherein, in the evaluating (STEP S3), the deterioration degree of the resin component is evaluated based on a predetermined relation between the fluorescence amount and the deterioration degree.

**Solution to Problem**

In the course of examining the cause of the above-mentioned problem, the present inventors have found that a resin deterioration evaluation test method that enables easy determination of deterioration conditions of the collected resin component and a resin recycling system including classification of the resin component using the method can be provided as follows. A product is manufactured with a resin component that has a fluorescent agent on its surface or to which a fluorescent agent is applied in a manufacturing process. After the product is used, collected, and separated into individual components, the fluorescence amount emitted by the fluorescent agent in response to irradiation with ultraviolet rays is measured to evaluate the deterioration of the resin component.

That is, the above-mentioned problems related to the present invention can be solved by a method as defined in appended independent claim 1. The use of the method in a recycling system is defined in independent claim 4. Preferred embodiments are defined in the dependent claims.

**Advantageous Effects of Invention**

According to the present invention as described above, it is possible to provide a resin deterioration evaluation test method that enables easy determination of determination conditions of the collected resin component and a resin recycling system using the method.

The mechanism by which the effects of the present invention are exhibited or made to act is not entirely clear, but presumed as follows.

According to the resin deterioration evaluation test method of the present invention, a product is manufactured with a resin component which has a fluorescent agent on its surface or to which a fluorescent agent is applied in a manufacturing process. After the product is used, collected, and separated into individual components, the fluorescence amount emitted by the fluorescent agent in response to irradiation with ultraviolet rays is measured to evaluate the deterioration of the resin component. As a result, it is possible to provide a resin deterioration evaluation test method with which the deterioration conditions of the resin component can be determined.

Therefore, the present invention is different from the techniques disclosed in Patent Documents 1 and 2 in that there are no limitations to the type of a resin that can be used, type of a functional group, and label reagent, and that a small amount of fluorescent agent is selectively applied to a part (surface) of the component. Because of the sufficient fluorescence amount that is stably emitted, it is inferred that the provided resin deterioration evaluation test method enables easy determination of deterioration conditions of the collected resin.

According to the recycling system of the present invention, the following effects are presumed to be obtained. Since the fluorescent agent is removed after the evaluation, almost no foreign matter is included in the recycled resin. Since a metal stabilizer is added at the time of kneading, deterioration of the recycled resin can be suppressed even when the fluorescent agent is not completely removed.

**Brief Description of Drawings**

- FIG. 1 is a flowchart showing summary of a process in a recycling system of the present invention.
- Fig. 2 shows an example of a measuring device that measures a fluorescence amount in response to irradiation of a fluorescent agent of collected resin with ultraviolet light.
- FIGs. 3A to 3C are schematic diagrams each explaining principle of a resin deterioration evaluation test method.

**Description of Embodiments**

The resin deterioration evaluation test method of the present invention using a fluorescent agent is characterized in that it includes at least the following STEP S2 and STEP S3. STEP S2: irradiating a resin component with ultraviolet rays and measuring a fluorescence amount emitted by a fluorescent agent in response to the irradiating. The fluorescent agent is on a surface of the resin component and emits fluorescence in response to ultraviolet irradiation in itself.STEP S3: evaluating a deterioration degree of the resin component based on the fluorescence amount. They are technical features common to or corresponding to the embodiments described below.

According to an embodiment of the present invention, from the viewpoint of exhibiting the effects of the present invention, the fluorescent agent is preferably applied to the surface of the resin component in manufacturing a product including the resin component (STEP S1). Furthermore, in STEP S3, the deterioration degree of the resin component is preferably evaluated based on a predetermined relation between a fluorescence amount and a deterioration degree of the resin in order to evaluate the deterioration degree accurately and easily.

Furthermore, in order to improve the accuracy of the evaluation, a fluorescence amount emitted by the fluorescent agent preferably satisfies the following expression: $10 \leq (F_{10} / F_0) \times 100 \leq 80$, wherein Fo represents the fluorescence amount measured before a light emission test using a xenon arc lamp, and Fio represents the fluorescence amount measured after the light emission test, the light emission test corresponding to an outdoor exposure for ten years.

The resin recycling system of the present invention includes, in response to a result of the evaluating in the resin deterioration evaluation test method according to the present invention, classifying the resin component (STEP S4); and repelleting including: determination of a mixing rate of the resin component that is classified in the classifying; and formation of a mixture including the resin component at the mixing rate (STEP S7). This prevents severely deteriorated plastic materials from being used in recycling, and the strength of the recycled resin does not decrease thereby.

The repelleting preferably includes removal of a resin component whose deterioration degree is equal to or more than a predetermined degree. This also prevents severely deteriorated plastic materials from being used in recycling into a recycled resin.

The repelleting preferably includes removal of the fluorescent agent and an impurity from the resin component in order that a high-quality recycled resin is obtained.

Furthermore, the repelleting preferably includes addition of a metal stabilizer, in order that deterioration of the recycled resin is suppressed and the life of a component is extended.

Hereinafter, the present invention and its components, and embodiments and modes for carrying out the present invention will be described in detail. In this application, when a numeric range is represented by the term "to" between two numerals, it includes the numerals before and after the term "to" respectively as a lower limit and an upper limit.

< <Summary of Resin Deterioration Evaluation Test Method of Present Invention> >

The resin deterioration evaluation test method of the present invention using a fluorescent agent is characterized in that it includes at least the following STEP S2 and STEP S3.

STEP S2: irradiating a resin component with ultraviolet rays and measuring a fluorescence amount emitted by a fluorescent agent in response to the irradiating. The fluorescent agent is on a surface of the resin component and emits fluorescence in response to ultraviolet irradiation in itself.
STEP S3: evaluating a deterioration degree of the resin component using the fluorescence amount.

According to such a configuration, time and cost can be saved because it is not necessary to measure the molecular weight or to evaluate the strength of each resin component. Furthermore, it is possible to quantitatively evaluate the deterioration degree of samples accurately by measuring the fluorescence amount.

In this application, "deterioration of resin (component)" means variation(s) in features or characteristics of the resin (component) compared to those before shipping, such as mechanical characteristics, thermal characteristics, electrical characteristics, flame retardancy, fluidity in melting, odor, color, and molecular weight.

[1] Resin Deterioration Evaluation Test Method and Resin Recycling System Using the Same.

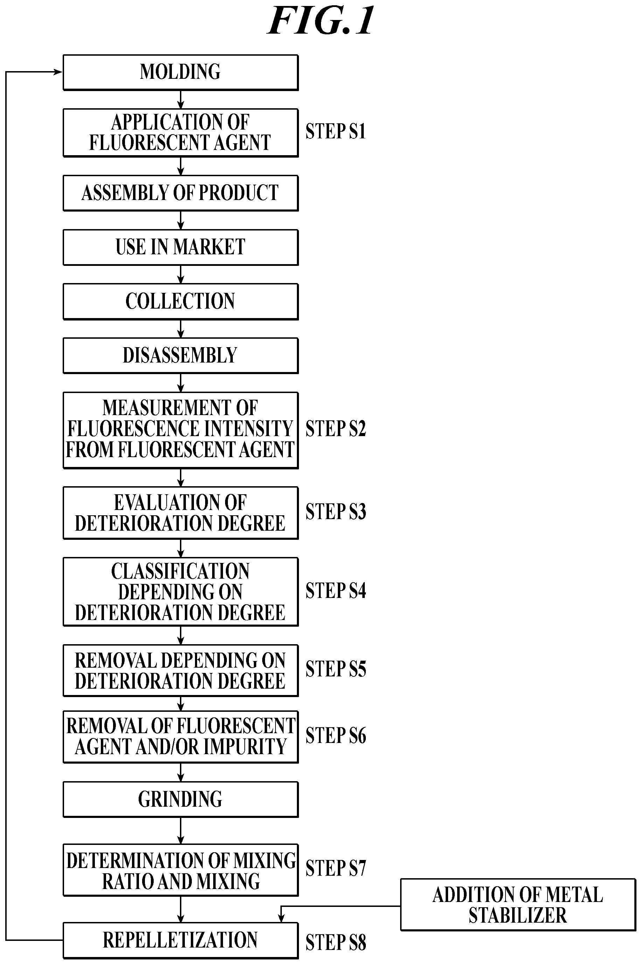

Hereinafter, the details of the resin deterioration evaluation test method of the present invention will be described with reference to a flowchart in FIG. 1 illustrating the processing in a resin recycling system. The repelleting process in the following description includes the steps from "collection" to "repelletization" in FIG. 1 .

[STEPs S1 and S2]

STEP S2 includes irradiating a resin component with ultraviolet rays and measuring a fluorescence amount emitted by a fluorescent agent in response to the irradiating. The fluorescent agent is on a surface of the resin component and emits fluorescence in response to ultraviolet irradiation in itself.

Furthermore, in STEP S1, the fluorescent agent is preferably applied to the surface of the resin component in a manufacturing process of a product provided with the resin component.

The fluorescent agent on the surface of the resin component regarding the present invention emits fluorescence in response to ultraviolet irradiation in itself, and a product with the resin component is manufactured by melting a virgin (non-recycled) resin alone or a mixture of a virgin resin and a recycled resin, running the mixture into a metal mold or the like, and molding. Alternatively, it may be obtained through a step of applying a fluorescent agent to a resin component. Hereinafter, a step of applying a fluorescent agent to a resin component according to a preferred embodiment of the present invention will be described.

A molded product, a molded product of a recycled resin, obtained using a molding machine that performs heating and melting for injection molding. The conventionally known method of molding may be used without limitation, such as an injection molding method, injection compression molding method, extrusion molding method, profile extrusion method, transfer molding method, hollow molding method, gas assist hollow molding method, blow molding method, extrusion blow molding, IMC (in-mold coating) molding method, rotational molding, multilayer molding, two-color molding, insert molding, sandwich molding, foam molding, and pressure molding. Among these, an injection molding method is preferably used.

The fluorescent agent according to the present invention may be an organic fluorescent pigment or an inorganic fluorescent pigment, that is excited by energy application such as ultraviolet rays and emits the excitation energy as light. The organic fluorescent pigment is preferably invisible so as not to affect the appearance of the product. The inorganic fluorescent pigment is generally more durable than the organic fluorescent pigment. The fluorescent agent according to the present invention may be a rare earth metal compound in which a luminescent center for generating fluorescence is a rare earth element such as europium (Eu), cerium (Ce), samarium (Sm), or ytterbium (Yb).

A preferably used fluorescent agent among these is one that is excited when irradiated with ultraviolet rays (wavelength range: 10 to 400 nm) and emits the excitation energy as visible light. Furthermore, in order to improve the evaluation accuracy, the fluorescence amount emitted by the fluorescent agent preferably satisfies the following expression: $10 \leq (F_{10} / F_0) \times 100 \leq 80$.

In the expression, $F_0$ represents the fluorescence amount measured before a light emission test using a xenon arc lamp and corresponding to an outdoor exposure for ten years, and $F_{10}$ represents the fluorescence amount measured after the light emission test. The fluorescent agent deteriorates at an appropriate rate when $(F_{10}/F_0) \times 100$ is 10% or more and 80% or less, which leads to a strong correlation between the deterioration degree of the fluorescent agent and the deterioration degree of the resin. When $(F_{10}/F_0) \times 100$ is 0%, for example, it is not possible to draw a calibration line. When $(F_{10}/F_0) \times 100$ is more than 80%, for example, the fluorescent agent deteriorates too slowly, which leads to a weak correlation between the deterioration degree of the resin and the deterioration degree of the fluorescent agent and thereby insufficient accuracy in calibration.

The "fluorescence amount after irradiation corresponding to an outdoor exposure for ten years" is obtained by an acceleration test of a xenon light emission test using a xenon arc lamp described later.

Well-known examples of the rare earth metal compound include europium chloride ($EuCl_3$) and europium oxide ($Eu_2O_3$). Compounds (oxides, sulfides, organic oxides, and the like) of lanthanum (La), cerium (Ce), praseodymium (Pr), neodymium (Nd), samarium (Sm), gadolinium (Ga), terbium (Tb), disporosium (Dy), holmium (Ho), erbium (Er), such as thulium (Tm), ytterbium (Yb), lutetium (Lu), yttrium (Y), and scandium (Sc) may be also used. Preferably, one or more rare earth metal compounds are used. In particular, metal compounds of Eu, Sm, and Tb emit a large fluorescence amount and are preferably used for determining the deterioration degree.

The method of applying the rare earth metal compound is not particularly limited. Preferably, the rare earth metal compound is appropriately dissolved in an organic solvent at a concentration suitable for application and uniformly applied by, for example, an inkjet printing method, spray coating method, brush coating method, method of sticking a seal to which the fluorescent agent is applied in advance, or the like.

Among them, an inkjet printing method in which the rare earth metal compound dissolved in an organic solvent is used as an ink is preferable because accurate application can be realized with a simple apparatus.

The organic solvents applicable to the ink include, for example, common alcohols such as methanol, ethanol, n-propanol, ethylene glycol, cyclopentane, o-xylene, toluene, hexane, tetralin, mesitylene, benzene, methylcyclohexane, ethylbenzene, 1,3-diethylbenzene, isophorone, 2-hexanol, triethylamine, cyclohexanone, diisopropylamine, isopropyl alcohol, pyridine, acetophenone, 2-butoxyethanol, 1-butanol, triethanolamine, aniline, diethylene glycol monobutyl ether (DEGMBE), tributylamine, diethylaminoethylamine, 1-pentanol, dioxane, and the like.

The organic solvents applicable to the ink also include polyhydric alcohol ethers (for example, ethylene glycol monomethyl ether, ethylene glycol monoethyl ether, ethylene glycol monobutyl ether, diethylene glycol monomethyl ether, diethylene glycol monomethyl ether, diethylene glycol monobutyl ether, propylene glycol monomethyl ether, propylene glycol monobutyl ether, ethylene glycol monomethyl ether acetate, triethylene glycol monomethyl ether, triethylene glycol monoethyl ether, triethylene glycol monobutyl ether, ethylene glycol monophenyl ether, propylene glycol monophenyl ether, and the like), amines (for example, ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, tetramethylpropylenediamine, and the like), amides (for example, formamide, N,N-dimethylformamide, N,N-dimethylacetamide, and the like), heterocycles (for example, 2-pyrrolidone, N-methyl-2-pyrrolidone, cyclohexylpyrrolidone, 2-oxazolidone, 1,3-dimethyl-2-imidazolidinone, and the like), sulfoxides (for example, dimethyl sulfoxide and the like), sulfones (for example, sulfolane and the like), urea, acetonitrile, acetone, and the like.

An inkjet printing method having a configuration described in, for example, JP2012-140017A, JP2013-010227A, JP2014-058171A, JP2014-097644A, JP2015-142979A, JP2015-142980A, JP2016-002675A, JP-2016-002682A, JP2016-107401A, JP2017-109476A, and JP2017-177626A can be appropriately selected and used.

As for the application amount of the fluorescent agent, for example, the application range on a resin substrate is 0.5cm × 0.5cm or more, and the application amount is preferably 0.0005 g/cm$^2$ or more. Because the fluorescent agent is preferably invisible in order not to affect the appearance of the product, the thickness of the applied fluorescence layer is preferably in the range of 1 to 50 μm, more preferably in the range of 10 to 40 μm, and most preferably in the range of 20 to 30 μm.

The deterioration degree of the resin is determined based on the measured intensity of fluorescence emitted by the fluorescent agent in response to irradiation with ultraviolet rays.

The resin component coated with the fluorescent agent (STEP S1 of the manufacturing process of the product using resin) is assembled into a product, used in the market, appropriately collected, disassembled, and returned to the individual resin component.

In STEP S2, the resin component is irradiated with ultraviolet rays and the fluorescence amount emitted by a fluorescent agent in response to the UV irradiation is measured. The fluorescent agent is on a surface of the resin component and emits fluorescence in resnponse to ultraviolet irradiation in itself.

In this application, a "ratio of fluorescence amount" means the percentage of fluorescence amount in response to UV irradiation from the fluorescent agent after deterioration, when the fluorescence amount in response to UV irradiation is set to 100% when the fluorescent agent has not been deteriorated.

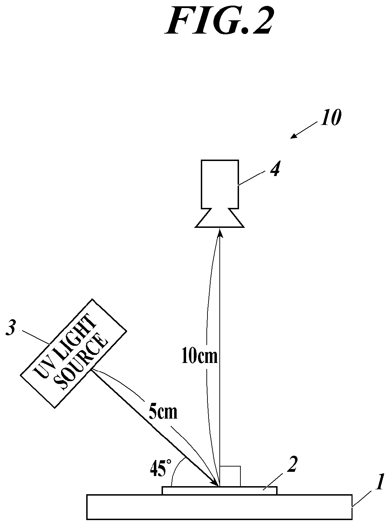

FIG. 2 shows an example of a measurement apparatus 10 (also referred to as a fluorescence amount measurement apparatus 10) that irradiates the collected resin having the fluorescent agent with ultraviolet rays and measures the amount of emitted fluorescence.

The fluorescence amount measurement apparatus 10 includes an ultraviolet light source 3 that is a UV lamp for mainly irradiating the fluorescent agent 2 on the resin 1 with ultraviolet rays, and a camera 4 that measures a fluorescence amount emitted inresponse to the UV irradiation.

The ultraviolet light source 3 is, for example, a VL-6.LC UV lamp (manufactured by VILBER LOURMAT). The distance from the emission surface of the ultraviolet light source 3 to the fluorescent agent applied surface of the irradiation target component is 5 cm, and the angle between the emitted ultraviolet rays and the fluorescent agent application surface is 45°.

The camera 4 that measures the fluorescence amount is, for example, D-850 (manufactured by Nikon Corporation) with a lens (for example, AF-S NIKKOR 35mm f/1.4G, manufactured by Nikon Corporation). The distance from the front surface of the lens to the fluorescent agent applied surface is 10 cm, and the lens is placed on a perpendicular line to the fluorescent agent application surface. The image capturing conditions of the camera are fixed. The captured image is processed by image processing software, and the fluorescence amount is calculated.

[STEP S3]

In STEP S3, the deterioration degree of the resin is evaluated using the fluorescence amount. Hereinafter, the principle of evaluating the resin deterioration degree is explained.

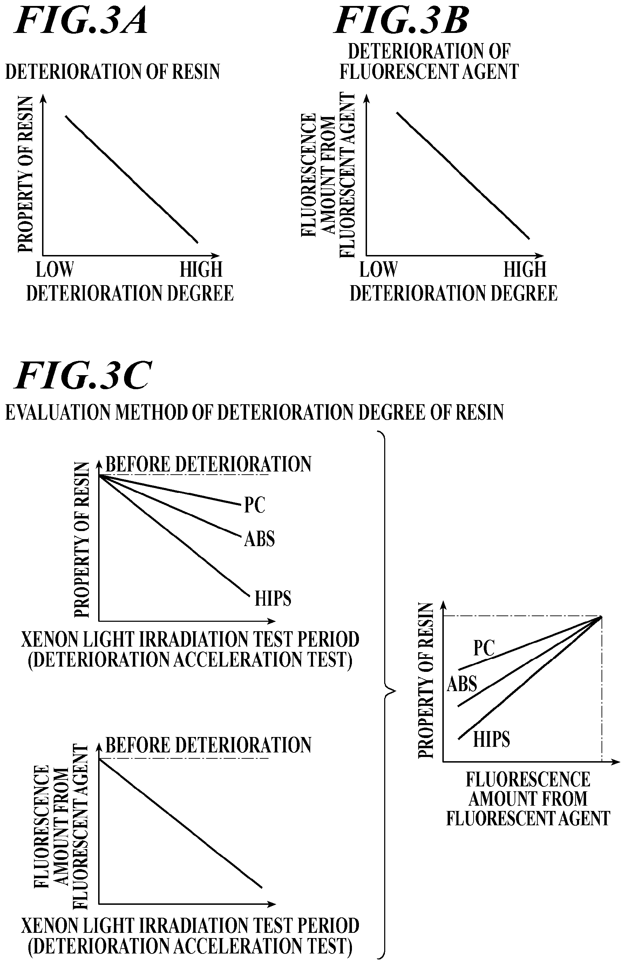

FIGs. 3A to 3C are schematic diagrams for explaining a principle used in a resin deterioration evaluation test method.

The schematic diagrams in FIG. 3A and FIG. 3B respectively shows the deterioration degree of the resin and the deterioration degree of the fluorescent agent. The horizontal axis of each of FIG. 3A and FIG. 3B indicates the deterioration degree. As the deterioration degree increases, the property (for example, a molecular weight, impact strength, and the like) of the resin and the fluorescence amount by the fluorescent agent respectively shown on the vertical axes of FIGS. 3A and 3B decrease. Based on FIG. 3A and FIG. 3B, an accelerated deterioration test of the resin and the fluorescent agent is performed, and variations in the properties of the resin and the fluorescence amount of the fluorescent agent depending on the deterioration are each measured. The accelerated deterioration test is a xenon light emission test using a xenon arc lamp (in accordance with, for example, the Japanese Industrial Standards (JIS) K7350-2:2008 Plastics - Methods of exposure to laboratory light sources).

When a variation of the molecular weight or the impact strength of the resin is monitored as a property of the resin, the weight average molecular weight or the impact strength of the resin is preferably measured with respect to the irradiation period in the xenon light emission test as follows.

<Measurement of Molecular Weight>

The molecular weight is measured with Gel Permeation Chromatography (GPC) as follows, for example. After adding a liquid as a solvent to the resin, ultrasonic waves are applied for 30 minutes, and the melted portion is used for measurement of a molecular weight with a GPC device. The GPC device used is HLC-8120GPC, SC-8020 (manufactured by Tosoh Corporation). The column used is TSKgel SuperHM-H (6.0 mm I.D. $\times$ 15 cm $\times$ 2). The eluent used is THF (tetrahydrofuran) for chromatography manufactured by Wako Pure Chemical Industries, Ltd. The measurement was performed using an RI detector under the following conditions: flow rate was 0.6 mL/min, sample injection amount is 10 $\mu$L, and measurement temperature is 40°C. The calibration curve is prepared using 10 samples ("TSK standard polystyrene" manufactured by Tosoh Corporation, i.e., A-500, F-1, F-10, F-80, F-380, A-2500, F-4, F-40, F-128, and F-700). The data collection interval in sample analysis is 300 ms. Depending on the type of resin, measurement conditions (solvent, type of column, measuring device, and the like) are changed as necessary.

<Impact Strength>

The impact strength is measured with a impact tester after leaving the test piece at a temperature of 23°C and a humidity of 50%RH for 16 hours, based on conditions in accordance with JIS K7110 (1999). For example, the impact test is performed with a PST-300 (manufactured by Shinyei Testing Machinery Co. Ltd.) under the conditions of a temperature of 23°C and a humidity of 55%RH.

The fluorescence amount of the fluorescent agent is measured with respect to the irradiation period in the xenon light emission test using the device and method described in above STEP S2.

The upper left diagram in FIG. 3C schematically shows deterioration the variation of three resins (polycarbonate (PC), acrylonitrile butadiene styrene (ABS) resin, and high impact (impact resistive) polystyrene (HIPS)).

The right diagram in FIG. 3C schematically shows the correlation between the property of each resin and the fluorescence amount from the fluorescent agent. The horizontal axis represents measurement data of the fluorescence amount from the fluorescent agent, and the vertical axis represents measurement data of the property of the resin, each obtained at respective irradiation periods in the xenon light emission test. Based on this correlation diagram, the deterioration degree of the resin, i.e., the variation of the properties due to the deterioration, can be accurately estimated from the measured fluorescence amount from the fluorescent agent applied to the resin.

[STEP S4]

In STEP S4, resin components are classified depending on the deterioration degree evaluated in STEP S3. For example, the deterioration degrees of the resin are divided into several sections of different levels, and the resin components are classified into groups corresponding to the sections. For example, the resin components are classified by setting the following sections of the deterioration degree: 0% or more and less than 5%; 5% or more and less than 10%; 10% or more and less than 15%; and 15% or more. Considering the work efficiency, the resin components are preferably classified into three or four groups.

[STEP S5]

In this step, the resin component is removed (discarded) depending on the deterioration degree evaluated in step S3.

For example, when the resin component having a deterioration degree of 15% or more is removed from the recycling system, a severely deteriorated plastic component is not used for recycle, such that a decrease in strength of the recycled resin component can be suppressed.

[STEP S6]

Preferably, the recycling system of the present invention, includes a step of removing the fluorescent agent and an impurity (impurities).

Since the fluorescent agent and the impurity are removed after the evaluation, almost no foreign matter is included in the recycled resin. Even if the fluorescent agent is not completely removed, deterioration of the recycled resin can be suppressed by the metal stabilizer added at the time of kneading.

The impurities are substances attached to the resin from the "molding" to the classification in STEP S4, and specifically include dust, pollen, yellow sand, substances contained in tobacco smoke, nitrogen oxides, sulfur oxides, sebum, and the like.

The fluorescent agent and impurities are preferably removed by washing with water. In addition to water, alcoholic solvents such as methanol and ethanol may be used alone or in combination. Inorganic impurities and low molecular organic impurities can be removed. Surfactants are also preferably used to enhance detergency.

[STEP S7]

After STEP S6, each of the washed and classified resin components is grinded. In STEP S7, mixing rates are determined based on the purpose for repelletization. A mixture including the resin components at the corresponding mixing rates are prepared for repelletization.

[STEP S8]

Repelletization of the mixture obtained based on the mixing rate determined in STEP S7 is performed.

In the repelletization, resin pellets are preferably manufactured by applying a shearing force to the resin as a host material and other resin as necessary in a melt kneading apparatus.

Specific examples of the kneading apparatus include a KRC kneader (manufactured by Kurimoto, Ltd.); PolyLab System (manufactured by HAAKE Technik GmbH); Labo Plastomill (manufactured by Toyo Seiki Kogyo Co.,Ltd.); Nauta Mixer, Buss Ko-Kneader (manufactured by Buss Corporation); TEM extruder (manufactured by Toshiba Machine Co., Ltd.); TEX twin-screw kneader (manufactured by the Japan Steel Works, Ltd.); PCM kneader (manufactured by Ikegai Iron Works); Three Roll Mill, Mixing Roll Mill, Kneader (manufactured by INOUE MFG., INC.); Nidex (manufactured by Nippon Coke & Engineering Co., Ltd.); MS-type dispersion mixer, Neader-Ruder (manufactured by Nihon Spindle Manufacturing Co., Ltd.); and Banbury Mixer (manufactured by Kobe Steel, Ltd.). The size of the pellets may be appropriately determined. For example, the pellets are preferably particles having a major axis of about 3 to 5 mm.

STEP S8 may include a step of adding a metal stabilizer before the above repelletization.

Examples of metal stabilizer include oxalic acid derivatives, salicylic acid derivatives, hydrazide derivatives, triazole derivatives, and imidazole derivatives.

Examples of oxalic acid derivatives include oxalo-bis-1,2-hydroxybenzylidene hydrazide (trade name: Eastman Inhibitor OABH; manufactured by Eastman Kodak), 2,2'-oxamidobis(ethyl 3-(3,5-tert-butyl-4-Hydroxyphenyl) propionate) (trade name: Naugard® XL-1, manufactured by Shiraishi Calcium Co., Ltd.).

Examples of the salicylic acid derivative include 3-(N-salicyloyl) amino-1,2,4-triazole (trade name: ADEKA STAB® CDA-1, manufactured by ADEKA CORPORATION), decamethylene dicarboxylic acid disalicyloyl hydrazide (trade name: ADEKA STAB® CDA-6, manufactured by ADEKA Corporation), and salicylidene salicyloyl hydrazine (trade name: Chel-180, manufactured by BASF).

Examples of the hydrazide derivatives include N,N'-bis ((3- (3,5-di-tert-butyl-4-hydroxyphenyl) propionyl)) propionohydrazidc (trade name: CDA-10, manufactured by ADEKA, trade name: Qunox®, manufactured by Mitsui Fine Chemical Inc.)

Examples of triazole derivatives include benzotriazole, 3-amino-1,2,4-triazole, 2-mercaptobenzotriazole, 2,5-dimercaptobenzotriazole, 4-alkylbenzotriazole, and 5-alkylbenzotriazole, 4,5,6,7-tetrahydrobenzotriazole, 5,5'-methylenebisbenzotriazole, 1-[di(2-ethylhexyl)aminomethyl]-1,2,4-triazole, 1-(1-butoxy ethyl)-1,2,4-triazole, acylated 3-amino-1,2,4-triazole, and the like.

Examples of imidazole derivatives include 4,4'-methylenebis (2-undecyl-5-methylimidazole) and bis[(N-methyl) imidazol-2-yl] carbinol octyl ether.

From the viewpoint of deactivating the metal in the collected materials, the rate of the metal stabilizer with respect to the resin is preferably 0.01% by mass or more, more preferably 0.1% by mass or more.
From the viewpoint of saturation of the effect of deactivating the metal in the collected material, the rate of the metal stabilizer is preferably 1% by mass or less.

In the recycle system of this invention, STEPs S5, S6, and S8 are not necessarily required steps, and can be omitted.

[2] Resin Used in Recycling System

The resin used in the recycling system of this invention is preferably a thermoplastic resin, such as polycarbonate (PC) resin, polypropylene (PP) resin, or polystyrene (PS) resin. However, the present invention is not limited thereto.

Polycarbonate

The polycarbonate referred to in the present invention is a polymer having a basic structure having a carbonate bond represented by the formula: -[-O-X-O-C(=O)-]-. In the formula, X represents a linking group and is generally a hydrocarbon. However, for the purpose of imparting various properties, X introduced with a hetero atom or a hetero bond may be used.

In general, aliphatic polycarbonates and aromatic polycarbonates are known as polycarbonates. Since an aliphatic polycarbonate has a low thermal decomposition temperature, and the temperature at which molding can be performed is low, methods to improve heat resistance are usually taken. For example, the thermal decomposition temperature is improved by reacting a terminal hydroxyl group of an aliphatic polycarbonate with an isocyanate compound. In addition, aliphatic polycarbonates produced by copolymerizing carbon dioxide and epoxide in the presence of a metal catalyst have excellent properties such as impact resistance, lightness, transparency, and heat resistance. Further, because it is biodegradable, it has a low environmental impact, and is an important resin as an engineering plastic material and a medical material because of its characteristics.

On the other hand, aromatic polycarbonate resins have excellent physical properties such as heat resistance, transparency, hygiene, and mechanical strength (e.g., impact strength), and are widely used in various applications. An "aromatic polycarbonate" refers to a polycarbonate in which each carbon directly bonded to a carbonate bond is an aromatic carbon. For example, a polycarbonate using a diol component containing an aromatic group such as bisphenol A may be used as a diol component constituting a polycarbonate. In particular, a polycarbonate using only a diol component containing an aromatic group is preferable. Known manufacturing methods thereof are: a method of reacting an aromatic dihydroxy compound such as bisphenol A with phosgene (interface method); and a method in which an aromatic dihydroxy compound such as bisphenol A or a derivative thereof and a carbonic diester compound such as diphenyl carbonate are subjected to an ester (exchange) reaction in a molten state (melting method or transesterification method).

In the present invention, it is particularly preferable to use an aromatic polycarbonate from the viewpoints of heat resistance, mechanical properties, and electrical characteristics.

As the aromatic polycarbonate, a linear polycarbonate and a branched polycarbonate are known. It is preferable to use properly according to the purpose or to use together. The branched polycarbonate has a lower melt flow rate than the linear polycarbonate having the same molecular weight. Therefore, a linear polycarbonate may be selected or the linear polycarbonate may be mixed with a linear polycarbonate to improve fluidity.

To obtain a branched aromatic polycarbonate, the following methods may be referred to. A branched aromatic polycarbonate having a branch derived from a polyfunctional compound having three or more functional groups reactive with carbonate diester in the molecule (described in JP-A 2006-89509 and WO 2012/005250) and a linking agent containing trifunctional or higher aliphatic polyol compound (described in WO 2014/024904) are subjected to a transesterification reaction in the presence of a transesterification catalyst under reduced pressure conditions to obtain a branched aromatic polycarbonate.

The aromatic polycarbonate is obtained by reacting a dihydric phenol and a carbonate precursor. Examples of the reaction method include an interfacial polymerization method, a melt transesterification method, a solid phase transesterification method of a carbonate prepolymer, and a ring-opening polymerization method of a cyclic carbonate compound.

Representative examples of the dihydric phenol include: hydroquinone, resorcinol, 4,4'-biphenol, 1,1-bis (4-hydroxyphenyl)ethane, 2,2-bis(4-hydroxyphenyl)propane (commonly called bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl)cyclohexane, 1,1-bis(4-hydroxyphenyl)-3,3,5-trimethylcyclohexane, 2,2-bis(4-hydroxyphenyl)pentane, 4,4'-(p-phenylenediisopropylidene)diphenol, 4,4'-(m-phenylenediisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl)ketone, bis(4-hydroxyphenyl)ester, bis(4-hydroxy-3-methylphenyl)sulfide, 9,9-bis(4-hydroxyphenyl)fluorene and 9,9-bis(4-hydroxy-3-methylphenyl)fluorene. A preferred dihydric phenol is bis(4-hydroxyphenyl)alkane, and bisphenol A (hereinafter sometimes abbreviated as "BPA") is particularly preferred from the viewpoint of impact resistance, and is widely used.

In the present invention, in addition to bisphenol A-based polycarbonate, which is a general-purpose polycarbonate, it is possible to use a special polycarbonate produced using other dihydric phenols.

The polycarbonates (homopolymer or copolymer) produced by the following component as a part or all of the dihydric phenol component is suitable for applications in which dimensional changes due to water absorption and shape stability requirements are particularly severe. Examples of the dihydric phenol component are: 4,4'-(m-phenylenediisopropylidene)diphenol (hereinafter sometimes abbreviated as "BPM"), 1,1-bis(4-hydroxyphenyl)cyclohexane, 1, 1-bis(4-hydroxy)phenyl)-3,3,5-trimethylcyclohexane (hereinafter sometimes abbreviated as "Bis-TMC"), 9,9-bis(4-hydroxyphenyl)fluorene and 9,9-bis(4-hydroxy-3-methylphenyl)fluorene (hereinafter sometimes abbreviated as "BCF").

These polycarbonates may be used alone or in combination of two or more. Moreover, these may be used by mixing with a bisphenol A type polycarbonate generally used.

The production methods and properties of these polycarbonates are described in detail in, for example, JP-A 6-172508, JP-A 8-27370, JP-A2001-55435, and JP-A2002-117580.

The glass transition temperature Tg of polycarbonate is preferably 160 to 250°C, more preferably 170 to 230°C.

The Tg (glass transition temperature) is a value obtained by differential scanning calorimetry (DSC) measurement based on JIS K7121.

As the carbonate precursor, carbonyl halide, carbonate diester, or haloformate is used, and specifically, phosgene, diphenyl carbonate, or dihaloformate of dihydric phenol may be mentioned.

In producing an aromatic polycarbonate by an interfacial polymerization method using a dihydric phenol and a carbonate precursor, a catalyst, a terminal terminator, or an antioxidant for preventing the dihydric phenol from being oxidized may be used as needed. The aromatic polycarbonate resin according to the present invention include: a branched polycarbonate resin copolymerized with trifunctional or higher polyfunctional aromatic compounds, a polyester carbonate copolymerized with aromatic or aliphatic (including alicyclic) bifunctional carboxylic acids, a copolymerized polycarbonate copolymerized with a bifunctional alcohol (including an alicyclic group), and a polyester carbonate copolymerized together with such a difunctional carboxylic acid and a difunctional alcohol. A mixture which mixed 2 or more types of the obtained aromatic polycarbonate may be used

The branched polycarbonate increases the melt tension of the resin, and may improve the molding processability in extrusion molding, foam molding and blow molding based on such characteristics. As a result, a molded product by these molding methods, which is superior in dimensional accuracy, is obtained.

Preferable examples of a trifunctional or higher polyfunctional aromatic compound used in branched polycarbonate resins are: 4,6-dimethyl-2,4,6-tris(4-hydroxydiphenyl)heptane, 2,4,6-trimethyl-2,4,6-tris(4-hydroxyphenyl)heptane, 1,3,5-tris(4-hydroxyphenyl)benzene, 1,1,1 -tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, and a trisphenol such as 4-{4-[1,1-bis(4-hydroxyphenyl)ethyl]benzene}-α,α-dimethylbenzylphenol. Other examples of the polyfunctional aromatic compound are: phloroglucin, phloroglucid, tetra(4-hydroxyphenyl)methane, bis(2,4-dihydroxyphenyl)ketone, 1,4-bis(4,4-dihydroxytriphenylmethyl)benzene, trimellitic acid, pyromellitic acid, and benzophenone tetracarboxylic acid and its acid chloride. Of these, 1,1,1-tris(4-hydroxyphenyl)ethane and 1,1,1-tris(3,5-dimethyl-4-hydroxyphenyl)ethane are preferable, and 1,1,1-tris(4-hydroayphenyl)ethane is more preferred.

The structural unit derived from the polyfunctional aromatic compound in the branched polycarbonate resin is 0.03 to 1 mol%, preferably 0.07 to 0.7 mol%, more preferably 0.1 to 0.4 mol% in the total of 100 mol% of the structural unit derived from dihydric phenol and the structural unit derived from such polyfunctional aromatic compound.

In addition, the branched structural unit is not only derived from a polyfunctional aromatic compound, but may also be derived without using a polyfunctional aromatic compound, such as a side reaction during a melt transesterification reaction. The rate of such a branched structure may be calculated by $^1$H-NMR measurement.

The aliphatic bifunctional carboxylic acid is preferably α,ω-dicarboxylic acid. Examples of the aliphatic bifunctional carboxylic acid are: linear saturated aliphatic dicarboxylic acids such as sebacic acid (decanedioic acid), dodecanedioic acid, tetradecanedioic acid, octadecanedioic acid, and icosanedioic acid; acyclic dicarboxylic acid such as cyclohexanedicarboxylic acid. As the bifunctional alcohol, an alicyclic diol is more preferable, and examples thereof include cyclohexanedimethanol, cyclohexanediol, and tricyclodecane dimethanol. Further, a polycarbonate-polyorganosiloxane copolymer obtained by copolymerizing polyorganosiloxane units may also be used.

The reaction by the interfacial polymerization method is usually a reaction between a dihydric phenol and phosgene, and is reacted in the presence of an acid binder and an organic solvent. As the acid binder, for example, alkali metal hydroxides such as sodium hydroxide and potassium hydroxide, and pyridine are used.

As the organic solvent, for example, halogenated hydrocarbons such as methylene chloride and chlorobenzene are used.

In addition, catalysts such as tertiary amines and quaternary ammonium salts may be used to promote the reaction. As the molecular weight regulator, it is preferable to use monofunctional phenols such as phenol, p-tertbutylphenol and p-cumylphenol. Examples of the monofunctional phenol include: decylphenol, dodecylphenol, tetradecylphenol, hexadecylphenol, octadecylphenol, eicosylphenol, docosylphenol, and triacontylphenol. These monofunctional phenols having a relatively long chain alkyl group are effective when improvement in melt flow rate and hydrolysis resistance is required.

The reaction temperature is usually 0 to 40°C, the reaction time is several minutes to 5 hours, and the pH during the reaction is usually kept at 10 or higher.

The reaction by the melt transesterification method is usually a transesterification reaction between a dihydric phenol and a carbonic acid diester. A dihydric phenol and a carbonic acid diester are mixed in the presence of an inert gas, and reacted at 120 to 350°C under reduced pressure. The degree of vacuum is changed stepwise, and finally the phenols produced at 133 Pa or less are removed from the system. The reaction time is usually about 1 to 4 hours.

Examples of the carbonate diester include: diphenyl carbonate, dinaphthyl carbonate, bis(diphenyl) carbonate, dimethyl carbonate, diethyl carbonate, and dibutyl carbonate. Of these, diphenyl carbonate is preferred.

A polymerization catalyst may be used to speed up the polymerization rate. The polymerization catalysts are catalysts usually used for esterification and transesterification. Examples thereof are: hydroxides of alkali metals and alkaline earth metals such as sodium hydroxide and potassium hydroxide, hydroxides of boron and aluminum, alkali metal salts, alkaline earth metal salts, quaternary ammonium salts, alkoxides of alkali metals and alkaline earth metals, organic acid salts of alkali metals and alkaline earth metals, zinc compounds, boron compounds, silicon compounds, germanium compounds, organotin compounds, lead compounds, antimony compounds, manganese compounds, titanium compounds, and zirconium compounds. The catalyst may be used alone and may be used in combination of 2 or more types. The amount of these polymerization catalysts used is preferably selected in the range of $1 \times 10^{-9}$ to $1 \times 10^{-5}$ equivalent, more preferably $1 \times 10^{-8}$ to $5 \times 10^{-6}$ equivalent, with respect to 1 mol of dihydric phenol as a raw material.

In the reaction by the melt transesterification method, for example, 2-chlorophenylphenyl carbonate, 2-methoxycarbonylphenylphenyl carbonate and 2-ethoxycarbonylphenylphenyl carbonate may be added at the later stage or after completion of the polycondensation reaction in order to reduce phenolic end groups.

Further, in the melt transesterification method, it is preferable to use a deactivator that neutralizes the activity of the catalyst. The amount of the deactivator is preferably in the range of 0.5 to 50 mol with respect to 1 mol of the remaining catalyst. Further, it is used in a proportion of 0.01 to 500 ppm, more preferably 0.01 to 300 ppm, and particularly preferably 0.01 to 100 ppm with respect to the aromatic polycarbonate resin after polymerization. Preferred examples of the deactivator include: phosphonium salts such as tetrabutylphosphonium dodecylbenzenesulfonate and ammonium salts such as tetraethylammonium dodecylbenzyl sulfate.

Details of other reaction methods are well known in various documents and patent publications.

The weight average molecular weight of the polycarbonate is not particularly limited, but is preferably in the range of 20,000 to 60,000, more preferably in the range of 30,000 to 57,000, and still more preferably in the range of 35,000 to 55,000 when measured using GPC.

Polypropylene-Based Resin

Examples of the polypropylene-based resin include homopolypropylene, propylene-ethylene block copolymer, propylene-butene block copolymer, propylene-$\alpha$-olefin block copolymer, propylene-ethylene random copolymer, and propylene-butene random copolymer, propylene-$\alpha$-olefin random copolymer, propylene-$\alpha$-olefin graft copolymer and the like. The polypropylene-based resin may contain a known resin such as an ethylene-$\alpha$-olefin copolymer, a styrene elastomer, or the like, or a filler such as talc, mica, wollastonite, glass fiber, or the like.

Polystyrene-Based Resin

Examples of the polystyrene-based resin include polymers obtained by polymerizing monomers (monovinyl-based aromatic monomers such as styrene, $\alpha$-methylstyrene-p-methylstyrene, and p-t-butylstyrene). More specifically, examples of the polystyrene-based resin include a rubber-modified styrene-based polymers manufactured by dissolving a well known polystyrene (GPPS) or a rubber-like substance in a styrene-based monomer and performing bulk polymerization or bulk suspension polymerization. Examples of the rubbery substance include polybutadiene (PBD), styrene-butadiene copolymer (SBR), and the like, and typical examples include high impact polystyrene (HIPS) and middle impact polystyrene (MIPS). An acrylonitrile-styrene copolymer (AS resin) or an acrylonitrile-butadiene-styrene copolymer (ABS resin) may also be used. The AS resin is a typical polymer obtained by polymerizing acrylonitrile having a cyano group as a polar group and a vinyl cyanide-based monomer such as methacrylonitrile. The ABS resin is obtained by polymerizing acrylonitrile and styrene on polybutadiene. Methyl methacrylate (MMA) resin or Methyl methacrylate butadiene styrene (MBS) resin may also be used. The MMA resin is a typical polymer obtained by polymerizing a monomer composed of a carboxylated vinyl monomer such as methacrylic acid having carboxyl group as a polar group. The MBS resin is obtained by polymerizing polybutadiene with methyl methacrylate and styrene. The styrene-based resin may not be a newly synthesized one but a recycled one collected from used electric appliances. The polystyrene-based resin may contain a resin such as styrene elastomers, or a filler such as talc, mica, wollastonite, glass fiber, or the like.

Other Resin Components

A thermoplastic polyester resin may also be mixed with the resin mixture of the present invention. Examples thereof include: a polyethylene terephthalate resin (PET), a polypropylene terephthalate resin (PPT), a polybutylene terephthalate resin (PBT), a polyhexylene terephthalate resin, a polyethylene naphthalate resin (PEN), a polybutylene naphthalate resin (PBN), a poly(1,4-cyclohexanedimethylene terephthalate) resin (PCT), and a polycyclohexyl cyclohexylate (PCC). Among these, a polyethylene terephthalate resin (PET) and a polybutylene terephthalate resin (PBT) are preferable from the viewpoint of melt flow rate and impact resistance.

It is also preferable to add an elastomer to the resin composition of the present invention. By blending the elastomer, the impact resistance of the resulting resin composition may be improved.

In view of mechanical properties and surface appearance, examples of the elastomer preferably used in the present invention are: polybutadiene rubber, butadiene-styrene copolymer, polyalkyl acrylate rubber, polyorganosiloxane rubber, and IPN (Interpenetrating Polymer Network) type composite rubber composed of polyorganosiloxane rubber and polyalkyl acrylate rubber.

It is also preferable to appropriately use a resin additive in the resin composition of the present invention. Examples thereof are: a thermal stabilizer (e.g., a phosphorus compound), an antioxidant (e.g., a hindered phenol antioxidant), a mold release agent (e.g., an aliphatic carboxylic acid, an ester of an aliphatic carboxylic acid and an alcohol, an aliphatic hydrocarbon compound, and a polysiloxane silicone oil), a filler, a glass fiber, a UV absorber, a dye and a pigment (including carbon black), titanium oxide, an antistatic agent, an antifogging agent, a lubricant, an antiblocking agent, a melts flow rate improver, a plasticizer, a dispersant, and antibacterial agent. In addition, 1 type of resin additive may be mixed, and 2 or more types may be mixed by arbitrary combinations and ratios.

In particular, the thermal stabilizer is preferably added. The amount of the thermal stabilizer to be added is preferably within the range of 0.05 to 1 part by mass, based on 100 parts by mass of the resin composition.

Examples of the antioxidant having a function as the thermal stabilizer are as follows.

Examples of phenolic ones include 2,6-di-t-butyl-p-cresol, tetrakis[methylene-3-(3',5'-di-t-butyl-4'-hydroxyphenyl) propionate] methane, stearyl β-(3,5-di-t-butyl-4-hydroxyphenyl) propionate, 1,3,5-trimethyl-2,4,6-tris (3,5-di-t-butyl-4-hydroxybenzyl) benzene, triethylene glycol bis[3-(3-t-butyl-5-methyl-4-hydroxyphenyl) propionate, and the like. Examples of phosphorus ones include tris (2,4-di-t-butylphenyl) phosphite, tetrakis (2,4-di-t-butylphenyl) [1,1-4,4'-diylbisphosphonite, bis[2,4-bis(1,1-dimethylethyl)-6-methylphenyl] ethyl ester phosphorous acid, bis(2,4-di-t-butylphenyl) pentaerythritol diphosphite, triallyl phosphite, tri(mononynylphenyl) phosphite, and the like. Example of sulfur based ones include dilauryl-3,3'-thiodipropionate, dioctadecyl-3,3'-thiodipropionate, and the like. Among them, from the view point of thermal stability, the phenolic one is preferably tetrakis[methylene-3-(3',5'-di-t-butyl-4'-hydroxyphenyl) propionate] methane, the phosphorus one is preferably tris (2,4-di-t-butylphenyl) phosphite, and the sulfur based one is preferably dilauryl-3,3'-thiodipropionate.

The molded product made of the resin mixture formed according to the recycling system of resin described above can be suitably used for various components such as electric and electronic components, components for electric appliances, automobile parts, various building materials, containers, and miscellaneous goods.

**[EXAMPLES]**

Hereinafter, the present invention will be specifically described by way of examples, but the present invention is not limited thereto. In addition, although the term "part" or "%" is used in an Example, unless otherwise indicated, it represents "mass part" or "mass%".

[Example 1]

(1) Selection of Fluorescent Agent

The five fluorescent agents (A to E) described below were selected and used.

    A: Sunlumisis SP Blue (manufactured by Centraltechno Corp.)
    B: Sunlumisis SP Blue and red mixure (manufactured by Centraltechno Corp.)
    C: Sunlumisis SP Green (manufactured by Centraltechno Corp.)
    D: Sunlumisis SP Red (manufactured by Centraltechno Corp.)
    E: NIKKAFLUOR MC (manufactured by Nikka Co., Ltd.)

For each of the selected fluorescent agents, fluorescence amounts were measured before and after the xenon light emission test corresponding to an outdoor exposure for ten years using the xenon arc lamp using the fluorescence amount measurement apparatus (see FIG. 2). The ratio of the fluorescence amount was calculated using the following formula (1).

$$\text{Formula (1): } L_{10} (\%) = F_{10}/F_0 \times 100$$

In formula (1), $L_{10}$ represents the ratio of fluorescence amount after irradiation corresponding to an outdoor exposure for ten years, $F_{10}$ represents the fluorescence amount after irradiation corresponding to an outdoor exposure for ten years, and $F_0$ represents the fluorescence amount before the irradiation.

The fluorescence amount after irradiation corresponding to an outdoor exposure for ten years was obtained by an acceleration test in the xenon light emission test using a xenon arc lamp (in accordance with the JIS K7350-2:2008 Plastics - Methods of exposure to laboratory light sources, except that water spraying is not performed). Specifically, in the xenon light emission test, the light having an illuminance of 60 W/m$^2$ was emitted for 6905 hours at a black panel temperature (BPT) of 65°C and humidity of 50% RH.

the fluorescent amount was measured using the fluorescence amount measurement apparatus 10 in FIG. 2. The fluorescence amount measurement apparatus 10 includes an ultraviolet light source 3 that mainly irradiates the fluorescent agent 2 on the resin 1 with ultraviolet rays, and the camera 4 that measures the amount of fluorescence in response to the irradiation.

The ultraviolet light source 3 was a VL-6.LC UV lamp (manufactured by VILBER LOURMAT). The distance from the emission surface of the ultraviolet light source 3 to the fluorescent agent applied surface of the irradiation target component was 5 cm, and the angle between the emitted ultraviolet rays and the fluorescent agent application surface was 45°.

The camera 4 for measurement of the fluorescence amount was D-850 (manufactured by Nikon Corporation) with a lens (AF-S NIKKOR 35mm f/1.4G, manufactured by Nikon Corporation). The distance from the front surface of the lens to the fluorescent-agent-applied surface was 10 cm, and the lens was on a perpendicular line to the fluorescent agent application surface. The image capturing conditions of the camera were fixed. The captured image was processed by image processing software, and the fluorescence amount was calculated.

The resin was a commercially available polycarbonate resin plate. The fluorescent agent was applied to the resin plate in a square shape of 1cm×1cm by an inkjet method, at a coating amount of 0.002 g/cm$^2$.

TABLE I shows the ratio of the fluorescence amount after the xenon light emission test corresponding to an outdoor exposure for ten years using the xenon arc lamp to the fluorescence amount before the the xenon light emission test for each of the five fluorescent agents.

TABLE I

| Fluorescent Agent | Ratio of fluorescence amount after irradiation corresponding to outdoor exposure for ten years ($L_m$) (%) |
|---|---|
| A | 10 |
| B | 47 |
| C | 80 |
| D | 98 |
| E | 0 |

Next, the five fluorescent agents were applied to the following three virgin resin samples as shown in Table II. The fluorescent agent was applied to one of the virgin resin samplesin a square shape of 1cm×1cm by an inkjet method, at a coating amount of 0.002 g/cm$^2$.

PC: polycarbonate with a trade name of 301-10 manufactured by Sumika Polycarbonate Ltd., having a weight average molecular weight of 44,000

ABS: acrylonitrile butadiene styrene with a trade name of NH-627 manufactured by Kingfa SCI. & TECH. CO., LTD., having a weight average molecular weight of 122,000

HIPS: High impact polystyrene with a trade name of H9152 manufactured by PS Japan Co., Ltd., having a weight average molecular weight of 200,000

The weight average molecular weight was measured by the following procedure.

<Weight Average Molecular Weight>

The resin sample to be measured was dissolved in tetrahydrofuran (THF) to a concentration of 1 mg/mL, and then filtered using a membrane filter whose pore size is 0.2 μm, and the obtained solution was used as a sample for GPC measurement. A weight average molecular weight of the resin in the sample was measured under the GPC measurement conditions indicated below.

(GPC Measurement Condition)

As a GPC apparatus, "HLC-8320GPC/UV-8320" (made by Tosoh Corporation) was used. Two pieces of "TSKgel, Supermultipore HZ-H" (4.6 mm ID × 15 cm, made by Tosoh Corporation) were used as columns. Tetrahydrofuran (THF) was used as an eluent. The analysis was performed at a flow rate of 0.35 mL/min, a sample injection amount of 20 μL, and a measurement temperature of 40°C using an RI detector. The calibration curve was obtained by using "Polystyrene standard sample, TSK standard" manufactured by Tosoh Corporation. Ten samples of "A-500", "F-1", "F-10", "F-80", "F-380", "A-2500", "F-4", "F-40", "F-128", and "F-700" were used. The data collection interval in sample analysis was set to be 300 ms.

The accelerated deterioration test was performed on the resin sample to which with the fluorescent agent was applied and on the fluorescent agent itself. The test was a xenon light emission test using a xenon arc lamp (in accordance with the JIS K7350-2:2008 Plastics - Methods of exposure to laboratory light sources, except that water spraying is not performed). The deterioration of the resin and the deterioration of the fluorescent agent were measured as shown in FIG. 3A and FIG. 3B , respectively. In the xenon light emission test, the light having an illuminance of 60 W/m2 was emitted for 6905 hours at a BPT of 65°C and humidity of 50% RH.

The property of the resin was obtained by monitoring variation of the weight average molecular weight measured as described above.

The variation of the fluorescence amount from the fluorescent agent was monitored with the fluorescence amount measurement apparatus (see FIG. 2 ). The ratio of fluorescence amount after xenon light emission test was obtained using the following formula (2).

$$L_m \, (\%) = F_{test} / F_{ini} \times 100$$

In formula (2), $L_m$ represents the ratio of fluorescence amount after the xenon light emission test, Ftest represents the fluorescence amount after the xenon light emission test, and Fini represents the fluorescence amount before the xenon light emission test.

A reduction degree of the fluorescence amount was determined by the following formula (3).

The "reduction degree" is defined as follows.

When the fluorescence amount before the xenon light emission test is set to 100%, the fluorescence amount of the fluorescent agent after deterioration corresponding to an outdoor exposure for ten years is $L_{10}$ (%), and the measurement result (the fluorescence amount from the collected resin component) is $L_m$ (%). The reduction degree is represented by the following formula (3), which represents the reduction of fluorescence amount of the collected resin component with respect to the reduction of fluorescence amount after deterioration corresponding to an outdoor exposure for ten years.

$$\text{Formula (3): Reduction degree of fluorescence amount (\%)} = 100 - L_m \div 100 - L_{10} \times 100$$

Based on the measurement data described above and the the graph on the right side of FIG. 3C (a correlation graph between the resin property and the fluorescence amount from the fluorescent agent), compariton of resin properties (variation of the weight average molecular weight) was made between the "estimated deterioration degree" and "measured deterioration degree". The "estimated deterioration degree" was obtained based on the fluorescence amount from the fluorescent agent. The "measured deterioration degree" of resin properties was obtained based on the actually measured weight average molecular weight. The deterioration degree of the resin was each obtained using the following formula (4).

$$\text{Formula (4): (Deterioration degree of resin (\%))} = 100 - \text{(variation ratio of resin properties before and after xenon light emission test)}$$

When the difference between the "estimated deterioration degree" and "measured deterioration degree" was less than 5%, the evaluation accuracy was high (AA). When the difference between the "estimated deterioration degree" and "measured deterioration degree" was 5% or more, the evaluation accuracy was not high (BB).

The above measurement values and evaluation values are shown in TABLE II.

TABLE II

| Test No. | Materials | | Evaluation result | | Deterioration of resin | | Evaluation accuracy | Remarks |
|---|---|---|---|---|---|---|---|---|
| | Kind of resin | Kind of fluorescent agent | Ratio of fluorescence amount (Lm) (%) | Reduction degree (%) | Estimated deterioration degree (%) | Measured deterioration degree (%) | | |
| 1 | PC | A | 52 | 53 | 9 | 10 | AA | Present invention |
| 2 | PC | B | 55 | 85 | 17 | 15 | AA | Present invention |
| 3 | PC | C | 91 | 45 | 8 | 12 | AA | Present invention |
| 4 | ABS | A | 68 | 36 | 12 | 14 | AA | Present invention |
| 5 | HIPS | A | 34 | 73 | 31 | 27 | AA | Present invention |
| 6 | PC | D | 99 | 50 | 10 | 2 | BB | Present invention |
| 7 | PC | E | 0 | 100 | Evaluation Impossible | 18 | BB | Present invention |

As shown in TABLE II, the deterioration degree of resin can be estimated based on the measured fluorescence amount from the fluorescent agent applied to the resin. According to comparison of the actually measured deterioration degree of the resin with the estimated deterioration degree, it was found that the deterioration degree of resin can be estimated more accurately when the ratio of fluorescence amount after outdoor exposure for ten years is within a range from 10% to 80%.

[Example 2]

The following polycarbonate resin and the metal stabilizer were used for testing the effects of classification (STEP S4), removal (STEP S5), and determination of the mixing rate and formation of a mixture (STEP S7), and the effects of removal of fluorescent agent/impurity (STEP S6) and addition of the meta 1 stabilizer (STEP S8) in the recycling system.

PC: polycarbonate with a trade name of 301-10 manufactured by Sumika Polycarbonate Ltd., having a weight average molecular weight of 44,000
3-(N-salicyloyl) amino-1,2,4-triazole as a metal stabilizer with a trade name of ADEKA STAB® CDA-1, manufactured by ADEKA CORPORATION, added at a rate of 0.1% by mass of the resin

In the same manner as Test No. 1 in the above Example 1, the fluorescent agent A was applied to a molded product of virgin polycarbonate (PC) resin. Copying machines each including the molded product (resin component) were assembled, used in the marketplace for five years, and randomly collected. The variation of the fluorescence amount from the fluorescent agent applied to the polycarbonate resin was monitored with the fluorescence amount measurement apparatus in FIG. 2.
The deterioration degree of the resin estimated based on the fluorescence amount was obtained from each collected resin component.
The classification in STEP S4 was performed based on the deterioration degree of the resin based on the deterioration degree of the resin devided into four levels as follows: 0% or more and less than 5%, 5% or more and less than 10%, 10% or more and less than 15%, and 15% or more.
Based on the results of the classification, the mixing rate of the classified resins was determined, and the classified resins were mixed at the determined mixing rate to form a mixture sin each of Test No. 8 to No. 12 in Table III (STEP S7). The resin was mixed in a tumbler for 10 minutes and then dried in an oven at 100°C for 4 hours. In Test No. 9 to No. 12, resins with a deterioration degree of 15% or more were not mixed in the mixture.

TABLE III

| Classification of Resin (STEP S4) | Amount of Resin based on Mixing Rate (STEP S7) | | |
| --- | --- | --- | --- |
| | Test No. | | |
| | 8 | 9 | 10, 11, 12 |
| 15% ≤ Deterioration degree | 5 kg | 0 kg | 0 kg |
| 10% ≤ Deterioration degree < 15% | 7 kg | 7 kg | 3 kg |
| 5% ≤ Deterioration degree < 10% | 70 kg | 70 kg | 60 kg |
| 0% ≤ Deterioration degree < 5% | 18 kg | 18 kg | 32 kg |

Subsequently, as described in TABLE IV, the fluorescent agent/impurity were removed from the mixtures of Test No. 8 to No. 12 by washing with water (STEP S6), and the metal stabilizer was added for the repelletization (STEP S8). After STEP S8, a test piece subject to the impact strength test was each molded with an injection molding machine JSW 110AD (manufactured by Toshiba Machine Co., Ltd.) under the conditions of a molding temperature of 280°C, injection rate of 30 mm/min, and thickness of injection molding of 4 mm.
The resin mixture was washed with water as follows. Bransonic ultrasonic cleaner DHA-1000-6J (manufactured by Branson Ultrasonics, Emerson Japan, Ltd.) was placed in a horizontally long water tank for washing. The resin mixture was continuously transported and washed in a pure water bath in the tank for 10 minutes at the temperature of 30°C while ultrasonic waves were generated.
The impact strength of the obtained test piece was evaluated under the following conditions.

(Impact Strength)

After leaving the test piece for 16 hours at a temperature of 23°C and a humidity of 50%RH, the impact strength of the test piece was measured based on JIS K7110 (1999) with a impact tester. The impact strength was measured with No. 258 Impact Tester (manufactured by YASUDA SEIKI SEISAKUSHO, Ltd.) under the conditions of a temperature of 23°C and a humidity of 55%RH.

TABLE IV shows the conditions and evaluation results of the above tests.

| Test No. | Kind of Resin | Removal of resin when deterioration degree is 15% or more (STEP S5) | Mixing of resin when deterioration degree is 15% or more | Determination of mixing ratio of resin (STEP S7) | Removal of fluorescent agent/impurity (STEP S6) | Addition of metal stabilizer (STEP S8) | Impact Strength [kJ/ m2] | Remarks |
|---|---|---|---|---|---|---|---|---|
| 8 | PC | Not removed | Mixed | Not determined | Not removed | Not added | 13.2 | Present invention |
| 9 | PC | Removed | Not mixed | Not determined | Not removed | Not added | 48.8 | Present invention |
| 10 | PC | Removed | Not mixed | Determined | Not removed | Not added | 57.0 | Present invention |
| 11 | PC | Removed | Not mixed | Determined | Removed | Not added | 59.9 | Present invention |
| 12 | PC | Removed | Not mixed | Determined | Removed | Added | 60.4 | Present invention |

The following effects of the present invention are clearly shown in view of TABLE IV.
Comparison of Test No. 8 and No. 9 reveals that the impact strength of a recycled product is significantly improved from 13.2 kJ/m2 to 48.8 kJ/m2 when resin having a deterioration degree of 15% or more is removed in the recycling system of the present invention.
Comparison of Test No. 9 and No. 10 reveals that the value of impact strength can be improved by mixing resins in a mixing rate determined in STEP S7 such that resin having a small deterioration degree is at a high rate. Therefore, the quality of the recycled resin can be determined by changing the mixing rate depending on usage.
Comparison of Test No. 10 to No. 12 reveals that the value of impact strength can be improved either by removing the fluorescent agent and/or impurities (STEP S6) or by adding the metal stabilizer in the repelletization (STEP S8).

**Claims**

1.   A resin deterioration evaluation test method using a fluorescent agent, comprising:

  irradiating a resin component with ultraviolet rays and measuring a fluorescence amount emitted by a fluorescent agent in response to the irradiating (STEP S2), the fluorescent agent being on a surface of the resin component and emitting fluorescence in response to ultraviolet irradiation in itself; and
  evaluating a deterioration degree of the resin component based on the fluorescence amount (STEP S3), wherein, in the evaluating (STEP S3), the deterioration degree of the resin component is evaluated based on a predetermined relation between the fluorescence amount and the deterioration degree.

2.   The resin deterioration evaluation test method according to claim 1, further comprising:
  in manufacturing a product including the resin component, applying the fluorescent agent to the surface of the resin component (STEP S1).

3.   The resin deterioration evaluation test method according to any one of claims 1 to 2, wherein the fluorescent agent emits fluorescence whose amount satisfies the following expression:

$$10 \leq (F_{10}/F_0) \times 100 \leq 80,$$

wherein $F_0$ represents the fluorescence amount measured before a light emission test using a xenon arc lamp, and $F_{10}$ represents the fluorescence amount measured after the light emission test, the light emission test corresponding to an outdoor exposure for ten years.

4.  Use of the method according to any one of claims 1 to 3 in a resin recycling system configured to:

    in response to a result of the evaluating in the resin deterioration evaluation test method according to any one of claims 1 to 3, classify the resin component (STEP S4) depending on the evaluated deterioration degree; grind the classified resin component and repellet the ground resin including:

       determination of a mixing rate of the resin component that is classified in the classifying; and formation of a mixture including the resin component at the mixing rate (STEP S7).

5.  The use of the method according to claim 4, wherein the system is further configured to repellet the ground resin by removing a resin component whose deterioration degree is equal to or more than a predetermined degree (STEP S5).

6.  The use of the method according to any one of claims 4 or 5, wherein the system is further configured to repellet the ground resin by removing of the fluorescent agent and an impurity from the resin component (STEP S6).

7.  The use of the method according to any one of claims 4 to 6, wherein the system is further configured to to repellet the ground resin by adding a metal stabilizer (STEP S8).


**Patentansprüche**

1.  Ein Testverfahren zur Bewertung des Harzabbaus unter Verwendung eines Leuchtmittels, das Folgendes beinhaltet:

    Bestrahlen einer Harzkomponente mit Ultraviolettstrahlen und Messen einer Leuchtmenge, die von einem Leuchtmittel als Antwort auf das Bestrahlen abgegeben wird (SCHRITT S2), wobei sich das Leuchtmittel auf einer Oberfläche der Harzkomponente befindet und als Antwort auf Ultraviolettstrahlung in sich selbst ein Leuchten abgibt; und
    Bewerten eines Abbaugrads der Harzkomponente basierend auf der Leuchtmenge (SCHRITT S3), wobei der Abbaugrad der Harzkomponente beim Bewerten (SCHRITT S3) basierend auf einem vorbestimmten Verhältnis zwischen der Leuchtmenge und dem Abbaugrad bewertet wird.

2.  Testverfahren zur Bewertung des Harzabbaus gemäß Anspruch 1, das ferner Folgendes beinhaltet:
    beim Herstellen eines Produkts, das die Harzkomponente umfasst, Auftragen des Leuchtmittels auf die Oberfläche der Harzkomponente (SCHRITT S1).

3.  Testverfahren zur Bewertung des Harzabbaus gemäß einem der Ansprüche 1 bis 2, wobei das Leuchtmittel ein Leuchten abgibt, dessen Menge den folgenden Ausdruck befriedigt:

$$10 \leq (F_{10}/F_0) \times 100 \leq 80,$$

wobei $F_0$ die Leuchtmenge darstellt, die vor einem Lichtabgabetest unter Verwendung einer Xenon-Gasentladungslampe gemessen wurde, und $F_{10}$ die Leuchtmenge darstellt, die nach dem Lichtabgabetest gemessen wurde, wobei der Lichtabgabetest einer Bewitterung von zehn Jahren entspricht.

4.  Verwenden des Verfahrens gemäß einem der Ansprüche 1 bis 3 in einem Harzrecyclingsystem, das für Folgendes konfiguriert ist:

    als Antwort auf ein Ergebnis des Bewertens in dem Testverfahren zur Bewertung des Harzabbaus gemäß einem der Ansprüche 1 bis 3, Klassifizieren der Harzkomponente (SCHRITT S4) abhängig von dem bewerteten Abbaugrad; Zermahlen der klassifizierten Harzkomponente und erneutes Pelletieren des zermahlenen Harzes, umfassend:

Bestimmung eines Mischverhältnisses der Harzkomponente, die bei dem Klassifizieren klassifiziert wird; und
Bildung einer Mischung, die die Harzkomponente in dem Mischverhältnis umfasst (SCHRITT S7).

**5.** Verwenden des Verfahrens gemäß Anspruch 4, wobei das System ferner für Folgendes konfiguriert ist:
erneutes Pelletieren des zermahlenen Harzes durch Entfernen einer Harzkomponente, deren Abbaugrad einem vorbestimmten Grad entspricht oder darüberliegt (SCHRITT S5).

**6.** Verwenden des Verfahrens gemäß einem der Ansprüche 4 oder 5, wobei das System ferner für Folgendes konfiguriert ist:
erneutes Pelletieren des zermahlenen Harzes durch Entfernen des Leuchtmittels und einer Verunreinigung aus der Harzkomponente (SCHRITT S6).

**7.** Verwenden des Verfahrens gemäß einem der Ansprüche 4 bis 6, wobei das System ferner konfiguriert ist, um das zermahlene Harz durch Hinzugeben eines Metallstabilisators erneut zu pelletieren (SCHRITT S8).

**Revendications**

**1.** Une méthode d'essai d'évaluation de détérioration de résine utilisant un agent fluorescent, comprenant :

l'irradiation d'un composant résine avec des rayons ultraviolets et la mesure d'une quantité de fluorescence émise par un agent fluorescent en réponse à l'irradiation (ÉTAPE S2), l'agent fluorescent étant sur une surface du composant résine et émettant une fluorescence en réponse à l'irradiation ultraviolette en elle-même ; et l'évaluation d'un degré de détérioration du composant résine sur la base de la quantité de fluorescence (ÉTAPE S3), dans laquelle, lors de l'évaluation (ÉTAPE S3), le degré de détérioration du composant résine est évalué sur la base d'une relation prédéterminée entre la quantité de fluorescence et le degré de détérioration.

**2.** La méthode d'essai d'évaluation de détérioration de résine selon la revendication 1, comprenant en outre :
lors de la fabrication d'un produit incluant le composant résine, l'application de l'agent fluorescent sur la surface du composant résine (ÉTAPE S1).

**3.** La méthode d'essai d'évaluation de détérioration de résine selon n'importe laquelle des revendications 1 à 2, dans laquelle l'agent fluorescent émet une fluorescence dont la quantité répond à l'expression suivante :

$$10 \leq (F_{10}/F_0) \times 100 \leq 80,$$

dans laquelle $F_0$ représente la quantité de fluorescence mesurée avant un essai d'émission de lumière utilisant une lampe à arc au xénon, et $F_{10}$ représente la quantité de fluorescence mesurée après l'essai d'émission de lumière, l'essai d'émission de lumière correspondant à une exposition à l'extérieur pendant dix ans.

**4.** Utilisation de la méthode selon n'importe laquelle des revendications 1 à 3 dans un système de recyclage de résine configuré pour :

en réponse à un résultat de l'évaluation dans la méthode d'essai d'évaluation de détérioration de résine selon n'importe laquelle des revendications 1 à 3, classifier le composant résine (ÉTAPE S4) en fonction du degré de détérioration évalué ; broyer le composant résine classifié et regranuler la résine broyée incluant :

la détermination d'une vitesse de mélangeage du composant résine qui est classifié lors de la classification ; et
la formation d'un mélange incluant le composant résine à la vitesse de mélangeage (ÉTAPE S7).

**5.** L'utilisation de la méthode selon la revendication 4, dans laquelle le système est en outre configuré pour regranuler la résine broyée par élimination d'un composant résine dont le degré de détérioration est égal ou supérieur à un degré prédéterminé (ÉTAPE S5).

**6.** L'utilisation de la méthode selon n'importe laquelle des revendications 4 ou 5, dans laquelle le système est en outre configuré pour
regranuler la résine broyée par élimination de l'agent fluorescent et d'une impureté du composant résine (ÉTAPE S6).

**7.** L'utilisation de la méthode selon n'importe laquelle des revendications 4 à 6, dans laquelle le système est en outre configuré pour regranuler la résine broyée par ajout d'un stabilisant de métal (ÉTAPE S8).

# FIG.1

```
            ┌──────────────────────────┐
    ┌──────▶│         MOLDING          │
    │       └──────────────────────────┘
    │                    │
    │       ┌──────────────────────────┐
    │       │     APPLICATION OF       │  STEP S1
    │       │    FLUORESCENT AGENT     │
    │       └──────────────────────────┘
    │                    │
    │       ┌──────────────────────────┐
    │       │    ASSEMBLY OF PRODUCT    │
    │       └──────────────────────────┘
    │                    │
    │       ┌──────────────────────────┐
    │       │      USE IN MARKET       │
    │       └──────────────────────────┘
    │                    │
    │       ┌──────────────────────────┐
    │       │        COLLECTION        │
    │       └──────────────────────────┘
    │                    │
    │       ┌──────────────────────────┐
    │       │       DISASSEMBLY        │
    │       └──────────────────────────┘
    │                    │
    │       ┌──────────────────────────┐
    │       │     MEASUREMENT OF       │
    │       │  FLUORESCENCE INTENSITY  │  STEP S2
    │       │  FROM FLUORESCENT AGENT  │
    │       └──────────────────────────┘
    │                    │
    │       ┌──────────────────────────┐
    │       │      EVALUATION OF       │  STEP S3
    │       │   DETERIORATION DEGREE   │
    │       └──────────────────────────┘
    │                    │
    │       ┌──────────────────────────┐
    │       │      CLASSIFICATION      │
    │       │      DEPENDING ON        │  STEP S4
    │       │   DETERIORATION DEGREE   │
    │       └──────────────────────────┘
    │                    │
    │       ┌──────────────────────────┐
    │       │  REMOVAL DEPENDING ON    │  STEP S5
    │       │   DETERIORATION DEGREE   │
    │       └──────────────────────────┘
    │                    │
    │       ┌──────────────────────────┐
    │       │  REMOVAL OF FLUORESCENT  │  STEP S6
    │       │  AGENT AND/OR IMPURITY   │
    │       └──────────────────────────┘
    │                    │
    │       ┌──────────────────────────┐
    │       │        GRINDING          │
    │       └──────────────────────────┘
    │                    │
    │       ┌──────────────────────────┐
    │       │ DETERMINATION OF MIXING  │  STEP S7        ┌─────────────────────┐
    │       │    RATIO AND MIXING      │                 │  ADDITION OF METAL  │
    │       └──────────────────────────┘                 │     STABILIZER      │
    │                    │                   ┌───────────└─────────────────────┘
    │       ┌──────────────────────────┐     │
    └───────│     REPELLETIZATION      │◀────┘  STEP S8
            └──────────────────────────┘
```

# FIG.2

# *FIG.3A*

DETERIORATION OF RESIN

# *FIG.3B*

DETERIORATION OF
FLUORESCENT AGENT

# *FIG.3C*

EVALUATION METHOD OF DETERIORATION DEGREE OF RESIN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010132798 A
- JP 2006275762 A
- WO 2017220079 A1
- US 5201921 A
- JP 2012140017 A
- JP 2013010227 A
- JP 2014058171 A
- JP 2014097644 A
- JP 2015142979 A
- JP 2015142980 A
- JP 2016002675 A
- JP 2016002682 A
- JP 2016107401 A
- JP 2017109476 A
- JP 2017177626 A
- JP 2006089509 A
- WO 2012005250 A
- WO 2014024904 A
- JP 6172508 A
- JP 8027370 A
- JP 00155435 A
- JP 2002117580 A